# EUROPEAN PATENT APPLICATION

(11) **EP 1 087 212 A2**
(43) Date of publication of application: **28.03.2001**
(21) Application number: 00120723.2
(22) Date of filing: 22.09.2000
(51) Int. Cl.: G01D 11/24

(54) **Smart networkable sensor**

(30) Priority: 24.09.1999 US 404882
(71) Applicant: KAVLICO CORPORATION, Moorpark, CA 93021 (US)
(72) Inventor: Ahmed, Saleh U., Winnetka, CA 91306 (US); Song, Wu, Moorpark, CA 93021 (US); Clare, Kathleen M., Ventura, CA 93001 (US)
(74) Representative: Petraz, Gilberto Luigi

(57) **Abstract**

A networkable smart sensor senses an analog signal and converts this to a digital signal output. A processed signal is then communicated to a network. The sensor can be a stand-alone electronic signal processor sensor or can be networked for operation with a controller and/or other sensors. Sensors can operate in a master-slave or peer-to-peer communication mode. The sensors are for use in industrial applications including vehicle engines and processes.

## Description

### RELATED APPLICATIONS

This application relates to the technology described in U.S. Patent No. 5,657,780 (Park), U.S. Patent No. 5,758,865 (Casey), U.S. Patent No. 5,900,810 (Park), U.S. Patent No. 5,907,278 (Park), and U.S. Patent No. 5,929,754 (Park). The contents of these applications are incorporated by reference herein.

### BACKGROUND OF THE INVENTION

The present invention relates to a sensor system. More particularly, the invention is concerned with a network sensor system, particularly for use with engines, such as vehicle engines where multiple conditions need to be monitored and reported.

In engines such as automobile engines, conditions change during operation. For instance, the engine oil can deteriorate because of less viscosity in the oil. This can cause damage by increased friction of engine parts. Other conditions such as pressure and temperature also need to be sensed in an engine to prevent excess conditions and overheating which can cause breakdown of engine components and fluids. Often, the features that need to monitored can include those related to the power train control, air conditioning, brake system, air suspension, communication, water temperature, and pressure coolant levels and temperature and other features associated with the engine.

Current systems use different sensors for each of these conditions. The sensed conditions are communicated to a data bus network, which connects to an engine controller. This is not the most effective way of sensing and communicating data to an engine controller or computer associated with the engine.

Accordingly, there is a need to provide a system, method and apparatus for improved sensing of conditions, for instance in an engine, and communicating that to a controller or computer or operator.

### SUMMARY OF THE INVENTION

According to the present invention there is provided a sensor, which is networkable in a smart format and configuration with a controller. A sensor receives an analog output associated with an element or feature being sensed. The analog output is converted and electronically processed in circuitry associated with or mounted in the sensor, and subsequently provided as a digital output to a data bus network. The transmitted information would identify the source of the signal, additionally to a representation of the analog output data, and selectively priority information. Each sensor includes an analog to digital conversation circuit, and thereby produces the data processing requirements of an engine controller.

As engine operation and control becomes increasingly more sophisticated, moving more of the sensor functioning and data processing features into the sensor unit and from the engine controller decreases the data processing requirements of the engine controller, and permits for a more efficient means of sensing, monitoring, collecting and processing data association with the engine. Local sensing monitoring and processing to a higher degree is therefore an advantage over prior art sensing systems.

The invention is directed to the apparatus for sensing, the system for sensing and the method of sensing.

The invention includes the sensor, sensor network and controlling system, individually and collectively. The invention is further described with reference to the accompanying drawings.

### BRIEF DESCRIPTION OF THE DRAWINGS

Other objects, features and advantages of the invention will become readily apparent upon reference to the following detailed description when considered in conjunction with the accompanying drawings, in which like reference numerals designate the same elements throughout the figures.
Figure 1 is a system overview of sensors for different characteristics of an engine connected with a data bus network.
Figure 2A is a perspective view of a sensor unit or sensor device.
Figure 2B is a plan view of communication board for electronically processing data.
Figure 2C is a plan view of an analog sensor associated with the features, conditions or elements to be sensed.
Figure 2D is a plan view of an analog sensor associated with the features, conditions or elements to be sensed.
Figure 3 is a cross-sectional view of a sensor.
Figure 4A is a block diagram of a sensor communication board showing major components associated with the analog input, data processing and digital output from the electronics in the sensor.
Figure 4B is a block diagram of an electronics board associated with a different sensor, the electronic board receiving analog inputs, electronically processing the signal inputs and transmitting the processed signal as digital outputs.
Figure 5 is a flow diagram associated with the processing of the signal on the electronic board associated with the sensor.
Figure 6 is a schematic diagram illustrating in greater detail major electronic components on the electronic board of each sensor.
Figure 7A is a first output data frame associated with characteristics of the electronics associated with each sensor.
Figure 7B is a second output data frame associated with characteristics of the electronics associated with each sensor.
Figure 8A-8C are side views of different sensor devices.

### DESCRIPTION OF PREFERRED EMBODIMENTS

A networkable smart sensor, namely a data bus sensor is useful for a variety of applications covering a broad range of industries including automotive, heavy duty truck, bus, internal combustion engine, process, medical, and HVAC industries.

The sensor may be used to collect a wide variety of physical parameters including pressure, temperature, level, dielectric constant of fluids, tilt, acceleration, flow, density, current, voltage, etc. and convert them to a digital signal in accordance with a wide range of communication protocols, including CAN, SAE j1939, SAE j1708, etc.

The sensor performs its intended function in both cases - when installed as a single mode or in a network bus containing multiple sensors, and actuators supporting a similar or the same protocol.

When installed in a network configuration, the sensor provides peer-to-peer communication, or master-slave communication, supporting, receiving and transmitting message, field calibration, and network configuration etc. over the bus as well as performing functions of off-loading system responsibility or control of the system.

The sensor comprises of a basic sensing element, and necessary electronics to convert the signal from physical quantity to a specified digital output formal. This is all contained in a single package with a parameter sensing port and a connector appropriate for a specific application. The connector includes two pins for providing differential, digital, and data link using the dominant and recessive logic level.

All of the electrical functional units including signal conversion, condition, calibration, compensation, on board intelligence, communicator, and transceiver reside in a single monolithic chip. Alternatively, the system may be implemented using discrete devices mounted in a single enclosure.

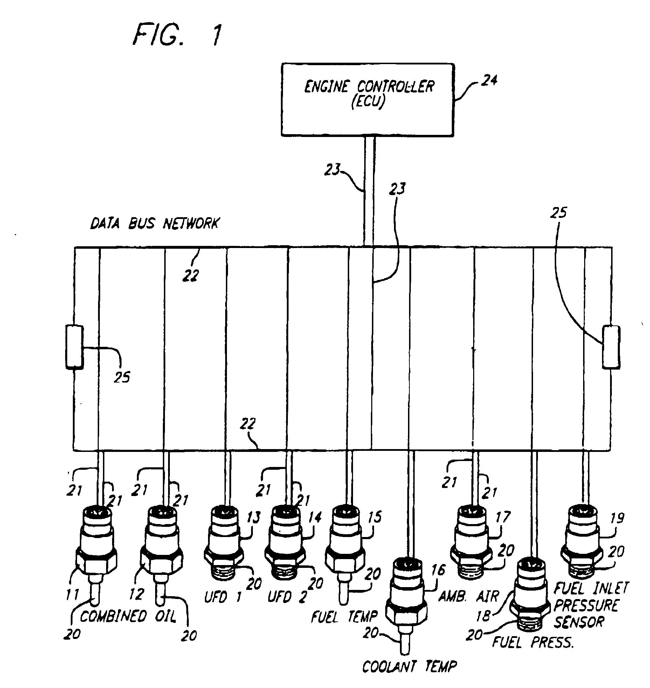

Figure 1 shows a system overview with sensors operating and connected appropriately with an engine. The engine could be for a vehicle or stationary internal combustion, diesel with a like engine. There are a series of sensors, which are shown. Sensor 11 and sensor 12 are for measuring combined oil characteristics, for instance pressure and temperature of oil in an oilpan. Sensor 13 is for measuring an Unintended Fuel Deliver (UFD1). Sensor 14 is for measuring a second Unintended Fuel Delivery (UFD2). Sensor 15 is for measuring fuel temperatures. Sensor 16 is for measure coolant temperatures. Sensor 17 is for measuring the ambient air temperature. Sensor 18 is for measuring fuel pressure. Sensor 19 is for measuring fuel inlet restriction pressure. Other characteristics can be measured.

The input for the sensors 11-19 is indicated at electrode or probe 20, and this is in the form of different kinds of sensing inputs as is appropriate. Electrode 20 for sensors 11, 12, 15 and 16 has a pin-type protruding arrangement for securing the sensor in relation to the engine, oil pan or other sensing location. In the sensors 13, 14, 17, 18 and 19 there are transducer elements which are sensitive to preserve in the sense that differences in spacing of the elements changes the capacitor characteristics. The terminal 20 for sensors 13, 14, 17, 18 and 19 have a screw threaded element for connection to a port with a mating thread. Sensors 11, 12, 15 and 16 can have similar mechanisms for securing the sensors relative to a sensing position. The sensor 20 receives data from the characteristics being measured and/or monitored in an analog format. Each of the sensors 11-19 has electronic circuitry to convert that analog data to electronic digital information.

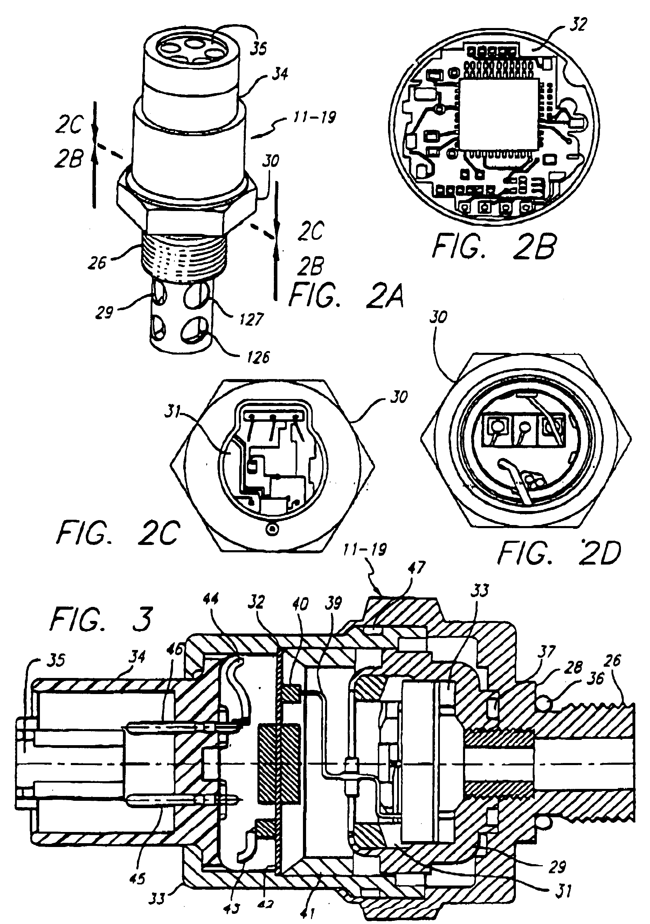

The nature of the analog data is such that the electronic circuitry translates that information to a signal having single or multiple bytes of information, wherein each byte includes eight bits of information. The output from each of the sensors 11-19 is transmitted along circuit wiring 21 to a bus system 22 for translating and for transmitting that data along output wiring 23 to an engine controller or central processing unit 24. There are two terminal resistors 25 coupled to the ends of the bus system for impedance matching, and preventing reflections. Figure 2A shows in a perspective view further detail of a typical sensor 11-19.

The format illustrated in Figure 2a is that of a sensor which has a screw thread connection 26 for anchoring to a receiving port in an engine block or the like.

A protruding electrode or probe 127 extends from the sensor, and this together with another electrode or probe 128 form the plates of a capacitor for sensing fluids which are present between these two electrodes forming the plates of a variable capacitor. Ports 29 in the protruding electrode 127, permit the free flow of fluid between electrodes 127 and 128. Changes in the characteristics of the fluid between electrodes 127 and 128 changes the dielectric nature and have capacitance effect of the sensors. The screw thread section 26 ends in a hexagonal nut 30, which can be manipulated by a tool and permits for the sensor 11-19 to be turned into its receiving port in the block. The analog portion of the signal processing system is contained internally at a location about adjacent to the position to the external nut 30.

The analog portion 31 is shown in Figures 2C and 2D. Mounted in adjacency to the analog sensor 31 is an electronic signal processing board 32. This board is mounted in a spaced relationship from the analog components 31, and is within a tubular mounting 33, which extends from the nut portion 30. There is a further internally mounted tubular portion 34, which extends from the tubular section 33, and this contains the connector ports 35 for connecting with the wiring 21 from the sensor. The tubular portion 34 can be formed of a plastic material.

As illustrated in Figure 3A, there is also an O-ring 27 at the interface of the threaded shank 26 and a lip portion 28. This O-ring permits for sealing of the sensors 11-19 in the body portion or block where sensing is to be effected. An additional internal housing 29 is provided, and it is in this housing that the analog measuring system or sensor 31 is mounted. The internal housing 29 has a further O-ring seal 36. The seal 37 may be a flattened form of washer-type configuration. A threaded shank 35 has a male portion, which engages a mating female portion inside the housing of the threaded portion 26. Element 29 has a cup-like formation for receiving the analog sensor or monitoring device 31, and yet a further O-ring or washer 38 is provided between the analog sensor 31 and the base of the cup of the portion 29. This can provide suitable shock absorbance as well.

From the analog sensor 31 there is an electrical wiring connection 39 which extends to the base 40 of the electronic board 32. A suitable connection is made between the wire 36 and the connector portion 37 of the electronic board. The board 32 is mounted to be suspended in an insulated manner from the housing. The board containing circuit 32 is affixed adjacent to an internal sleeve 41 and a lip 42, which is internally formed inside of the tubular formation 33. This provides sufficient rigidity to the support and is also a suitable insulated mounting. Wire 43 is a power input to the electronic board. The board 32 effects electronic processing of the input analog signal, and the output is a suitable digital signal which is directed along output line 44 to terminals 45 and 46, respectively.

These terminals are mounted inside of the tubular portion 34, and a connection can be effected to the terminals through a suitable port configuration 35. The topmost portion of the tubular section 33 has an internal directed flange, which engages a peripheral lip on the tubular portion 34 so that the two components 32 and 34 are effectively anchored together as required. An additional seal 47 is provided peripherally around the tubular portion 33 and in engagement with the wall 33.

As such, the sensor of the invention is one where the electronic board system 32 is located within each of the sensors 11-19 in a manner that the analog signal received by the analog sensor portion 33 is processed within the sensor body to provide a digital output signal. The electronic board 32 effects some processing of the analog data which does not therefore have to be processed by an engine controller 24.

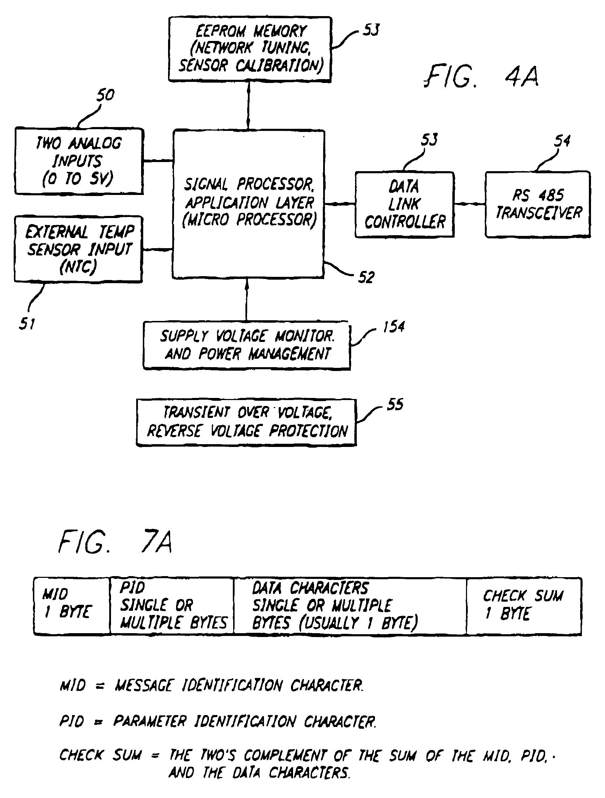

As represented in Figure 4A, there is shown a block diagram for the communication board 33 for one of the sensor configurations. Such a board would include the ability to receive two analog inputs 50 having a voltage range between 0 and 5 volts. There is also an ability to receive a voltage representative of the external temperature sensor input (NTC) 51. The signals are transmitted to a signal processor application layer or microprocessor 52.

The microprocessor also includes a memory chip or circuit EEPROM memory (Network Tuning Sensor Calibration) unit 53 that interacts with the microprocessor 52 as indicated. The microprocessor also has a supply voltage monitor and power management supply 154 which is active with the transcend overvoltage reverse voltage protection circuit 55. Data to and from the microprocessor 52 is passed through a data control link 153 which, in turn, is connected to a transceiver unit 54 for passing data to the output terminals and, in turn, to the data bus 22.

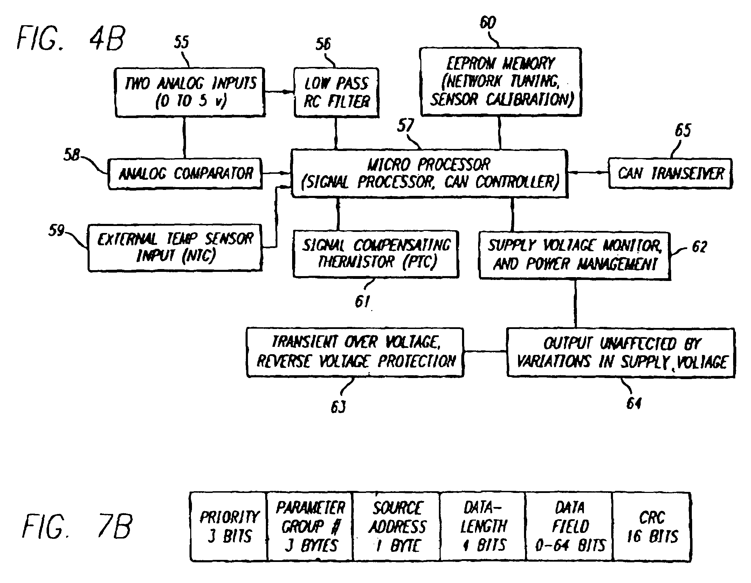

In Figure 4B a different configuration is shown for an electronic communication board of a different one of sensors 11-19.

In this configuration, two analog inputs would be received varying in voltage between 0 and 5 volts, as indicated by block 55. The output from this block would be directed to a low pass RC filter 56 and, in turn, to a microprocessor signal processor, CAN controller 57. The analog signals 55 are also directed to an analog comparator 58, which directs the signals also the microprocessor 57. There is an additional external temperature sensor input (NTC) 59, which directs its signals to the microprocessor 57. The microprocessor 57 is also connected with the EEPROM memory (Network Tuning Sensor Calibration) unit 60 that interacts with the unit microprocessor 57. A signal compensating Thermistor (PTC) unit 61 is also connected with microprocessor 57.

The microprocessor 57 is also connected with a supply voltage monitor and power management system 62. There is also a transient Over voltage Reverse voltage protection system 63 connected to the system. The A/D reference and sensor supply are tied together to ensure that the sensor outputs are insensitive to variation in supply voltage. This output is unaffected by variations in voltage as indicated by block 64. The voltage monitor power management block 62 is connected to ensure that data is valid during power up, power down, and brown out conditions. The lower network messages can be received as indicated using receive interrupt 71 and process as indicated. The output from the microprocessor 57 is directed to a Control Area Network (CAN) transceiver 65 which communicates through lines 21 and the bus 22 to the engine control unit 24.

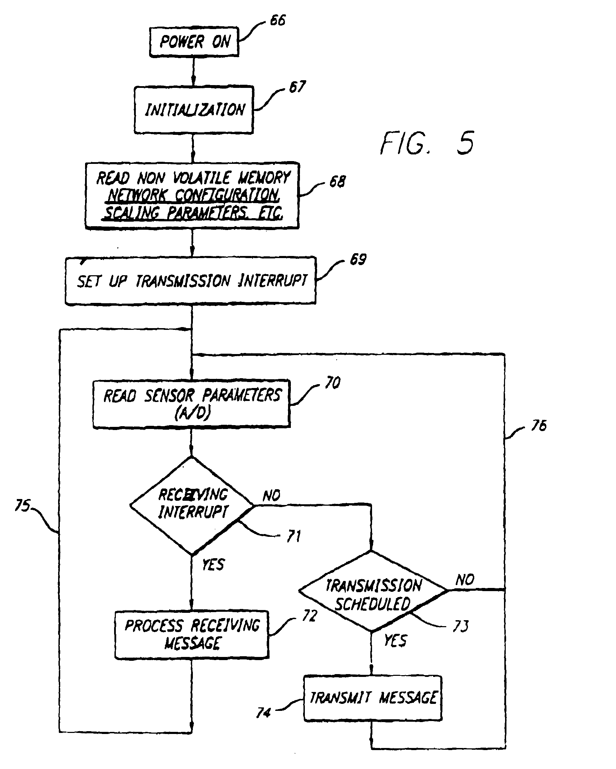

As illustrated in Figure 5 there is a program flow diagram, which is applicable to the communication boards as illustrated in Figures 4A and 4B. The operation for each of the sensors with the respect of electronic systems illustrated can be different, for instance, as illustrated in Figure 4a.

The response time can be different. The system for Figure 4b can be 0.5 millisecond. The flow of the process data would be that after the power after switching such the power is on as indicated by block 66, there is an initialization 67 of the electronic communications board 32. This is followed by reading the non-volatile memory, the network configuration and the scaling parameters 68.

The transmission interrupt is set up 69, and thereafter the data from the analog sensor 31 is then read and converted to a digital signal 70. Network messages can be received as indicated using receiving interrupt 71, and processed as indicated by 72 or a transmission is scheduled as indicated by 73, which, in turn, can transmit a message 74 as indicated by the different loops 75 and 76.

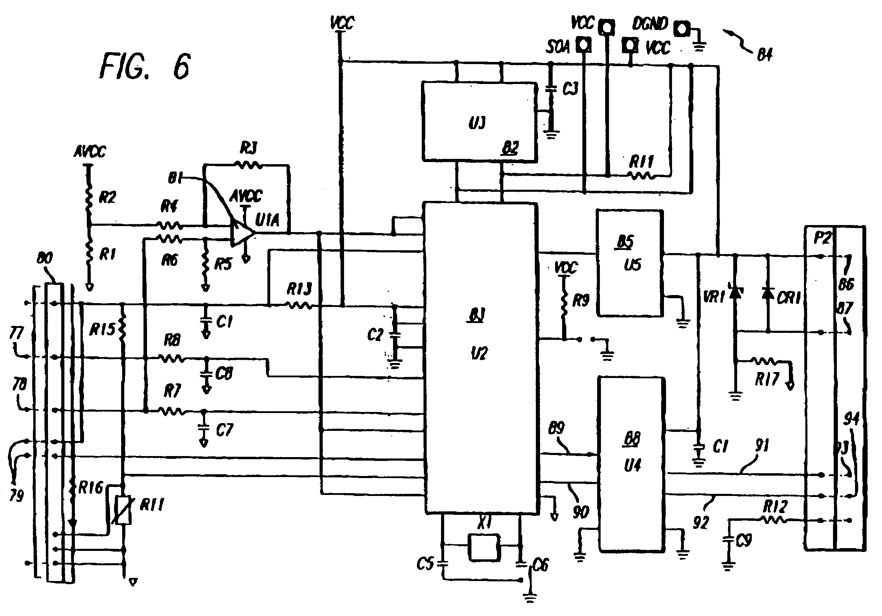

Figure 6 illustrates a representation in greater detail of the electronic communication board illustrated in Figure 4b. As illustrated in Figure 6 there is a DC analog input fed to terminals 77 and 78 together with one or more terminals 79 for receiving temperature. This is received from one or more of the terminals 20 or electrodes 128 of sensors 11-19. The DC analog signal is directed to the electronic PC board 80, which forms the base for an electric communication board 32. The signals are then processed by circuitry, which includes a fast path detection circuit 81, which is in the nature of an op-amp. There is also an external non-volatile memory 82, which is connected to a CAN controller 83, which in a preferred form of the invention is a Siemens (TM) microprocessor.

The external memory can permit for calibration network tuning and scaling up of the data rate as required. It is also possible to provide for optional direct programming of the system as indicated by inputs 84, which are connected with the microprocessor 83. Unit 85 is a power supervisor for the system and the power inlet is obtained through the terminals 86 and 87. The output from the microprocessor 83 is directed through a transceiver 88, which can move the digital data along lines 89 and 90 between the microprocessor and the bus. From the processing transceiver there is bi-directional data directed along lines 91 and 92 through terminals 93 and 94, respectively. These terminals are also shown as mounted on a different portion of the PC board 80.

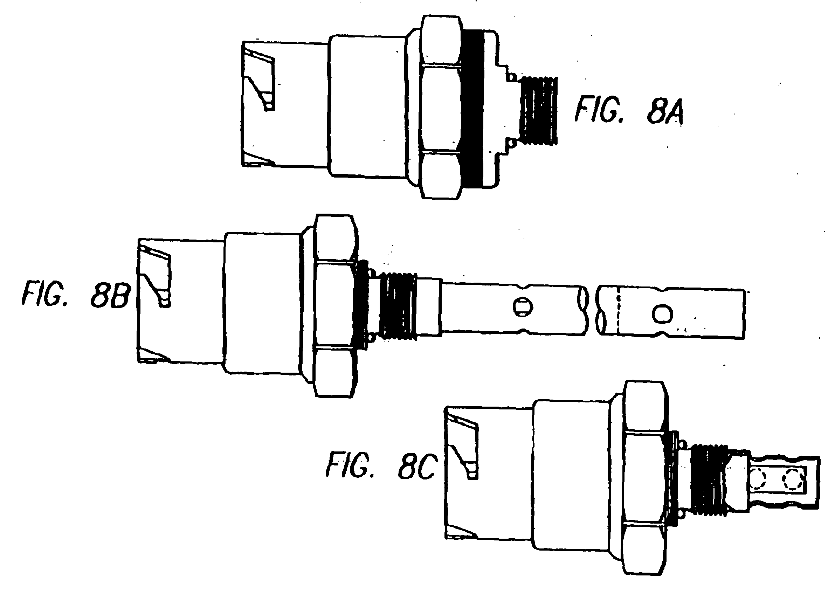

The Figure 7A is a representation of a first output data frame from the electronic sensor communication board 32. There is a message identification character (MID) which occupies one byte, and parameter identification character (PID) which occupies twelve bytes, data characters that could be up to one byte and a checksum for the data which can occupy one byte.

The Figure 7B is a representation of a second output data frame from the electronic sensor communication board 32. There is an illustration of the major components of a data frame for a different sensor. The frame includes a priority character of 3 bytes, followed by a parameter group of 3 bytes, a source address of 1 byte, a data length of 4 bytes, a data field of 0-64 bytes and a cycle redundancy check, or error check of 16 bytes.

In Figure 8A there is shown a cross-sectional view of a pressure transducer sensor. Figure 8B is a cross-sectional view of an oil level sensor. Figure 8C is a side view partially broken away showing an oil quality sensor. The oil quality sensor has an inner electrode which is at least partly covered by an outer circumferential electrode which has apertures. The pressure sensor transducer in Figure 8A is contained within the threaded portion of the electrode.

Features of the smart sensor, sensor network and system include the following:
1. The sensor converts various physical parameters including but no limited to pressure, temperature, tilt, dielectric, level, speed, position, flow, acceleration, etc. into a networkable, digital output formal.
2. The sensor contains on board intelligence, a micro-controller, and non-volatile memory such as EEPROM and flash memory to support various signal condition, computational, field programming, and communication services.
3. The sensor can transmit a single parameter, or it can be used to transmit multiple parameters when multiple sensing elements are contained in a single package.
4. The sensor supports a wide range of transmission rate from less than one millisecond too greater than tens of seconds as specified for the application.
5. The sensor contains all of its functional components including parameter sensing elements, signal conditioning electronics, including the capacity to voltage, resistance to voltage converters, A/D, micro-controller, EEPROM/Flash, communication hardware, etc. in a single package.
6. The sensor provides Fault Tolerant services with allowance for downgraded performance.
7. The sensor can be configured with various types of parameter sensing ports and electrical connectors as required for the application.
8. The sensor supports a variety of communication protocol including but not limited to CAN, SAE j1939, DeviceNet, LonWORKS, SAE j1708, SAE j1587, SAE j1850, PROFIBUS, Foundation Fieldbus, etc.
9. The sensor supports a wide range of message definitions and formulas in accordance with but not limited to IEEE 1451 - TEDS, all of the protocols listed in item 4, and other proprietary protocols as specified for the application.
10. The sensor supports standard CSMA (carrier sense, multiple access, and collision detection) based arbitration data link systems. In such system when collision occurs, no data is lost, one mode always wins the bus arbitration. Also, high priority messages become more deterministic.
11. The sensor application domain includes a wide or a variety of industries including but not limited to automotive, aerospace, truck and bus industry, internal combustion engine, HVAC, medical process industries, etc.
12. The sensor provides services for both "master/slave", and "peer to peer" communication. The latter method is especially useful when no central CPU is present in the system.
13. The sensor can be installed as a stand-alone device or in a network containing multiple devices including sensors, actuators, etc.
14. The sensor outputs are insensitive to variation in supply voltage. This is accomplished through hardware scaling and matching of internal reference.
15. The sensor supports various field programming functions including field calibration, network configuration, parameter scaling, and resolution, etc.
16. The sensor performs self-diagnostic, and broadcast fault codes associated with the specific fault including below range, above range, defective, open/short, in-range failures, etc.
17. The sensor performs complex signal conditioning functions and algorithms including high order linearization, parameter ID (PID), etc. as required for the application.
18. The sensor may also broadcast processed data, e.g., density calculation, maximum, minimum, sorted value of the parameter or parameters, etc.
19. The sensor supports monitoring events of fast direction of less than a few microseconds, e.g., measurement of duty cycle, frequency, pulse width, etc.
20. The sensor supports various type of network services including transmission of configuration data, parameter data, manufacturing information, fault codes, etc. at a predetermined update rate or upon request by another code. The sensor also supports response to command services whereby sensor configuration including calibration, configuration, scaling and resolution, etc. may be altered in the field.
21. The sensor supports communication services that include point to point, destination specific as well as global communication.
22. The sensor contains manufacturing and calibration information embedded in its internal non-volatile memory which can be readily accessed in the field This makes the individual part tracking and servicing easy and simple.
23. The sensor provides tamper protection and, therefore, the sensor output cannot be altered by modifying the harness in the field.
24. The sensor, when installed in a network system, eliminates the need for redundant sensors since data is available to all of the modes in the system at the same time.
25. The sensor, when installed in a network configuration, simplifies the wiring harness.
26. The sensor supports various standard network topologies.
27. The sensor supports various forms of physical layers including but not limited to two wires, single wire, IRDA infrared, and wireless, etc.
28. The sensor supports data and power multiplexed over the same bus.
29. The sensor supports various transceivers including but not limited to RS232, RS485, CAN transceiver, etc.
30. The sensor provides a better immunity to electromagnetic interference.
31. The sensor supports loop power where a single supply is used to power up all of the devices on the network.
32. The sensor supports sleep mode, power down mode, or other power saving operating modes to conserve power when necessary.
33. The sensor provides measurement validation wherein invalid data is discarded.
34. The sensor supports extensive error checking including bit error, frame error, and message error. Checksum and CRC error check methods are also supported.
35. The sensor supports both error active and error passive services. If the error count is greater than the preset level, the then sensor runs in "bus off" state.
36. The sensor provides system alarm data.
37. The sensor may provide computational services for other modes and systems required for the applications.
38. The sensor may perform functions that are normally performed by the system CPU when required by the application. In such case it will reduce the burden on the system and increase its throughput.
39. The sensor supports closed loop servo system and subsystem where the sensor and actuator reside in a network and form the complete system and also perform all of the functions required for the operation of the system. In such a system no intervention is required from the CPU. Examples of such system are engine control, emission control, oil monitoring system, etc.
40. The sensor supports test stand calibration, and recalibration as required or the application. Such facilities are highly desirable for the EGR system for engine applications, specifically for the passenger car and for heavy duty vehicles to meet the regulatory standard. Many other forms of the invention exist, each differing from others in matters of detail only. For instance, the sensors may be of use in monitoring different industrial or other processes. The invention is to be determined solely by the following claims.

## Claims

1. A sensor comprising:
a threaded metal housing for threading into a block or housing associated with an engine;
an analog sensor mounted in the housing on a support in the housing, the analog sensor being for sensing a condition of the engine;
an electronic communication board mounted in the housing in connection with the analog sensor and the electronic communication board effecting translation of the analog signal to a digital signal; and
circuitry and output terminals for transmitting the digital signal to an output network.

2. A sensor as claimed in claim 1 including circuitry to permit operation with other sensors in a network, and wherein the output from the sensor is connected for communication to a data bus and wherein the output is such that the communication can be connected in a peer to peer mode with the other sensors or in a master-slave mode with a central processor unit associated with the sensor network.

3. A sensor comprising:
a housing for anchoring in relation to an area to be sensed;
a substrate mounted within the housing and including an inner surface and an outer surface, an analog sensor mounted in the housing;
an electronic communication board mounted in the housing in connection with the analog sensor and the electronic communication board effecting translation of the analog signal to a digital signal; and
means for transmitting the digital signal to an output.

4. A networkable smart sensor comprising:
a metal housing for locating an electrode for obtaining a measure of a condition to which the electrode is exposed;
means for translating the sensed condition into an analog signal;
a circuit for translating the analog signal into a digital signal; and
means for directing the digital signal to an electronic system remote from the system.

5. A sensor as claimed in claim 5 wherein the sensor includes means for processing the digital signal prior to transmitting the signal to the remote electronic system.

6. A system including multiple sensors as claimed in claim 4 wherein each sensor is for sensing a particular predetermined environmental condition, and means for directing the outputs for the multiple sensors to a processing unit thereby to permit the processing unit selectively to control or interact with the sensors.

7. A system including multiple sensors as claimed in claim 4 wherein each sensor is for sensing a particular predetermined environmental condition, and means for interconnecting the sensors whereby the sensors can operate in a peer to peer relationship.

8. A system as claimed in claim 6 including means for interconnecting the sensors such that sensors can operate in a master-slave relationship.

9. A sensor as claimed in claim 4 wherein the circuit in the sensor includes means for effecting signal conversion from analog to digital, signal conditioning, signal calibration, signal compensation, signal communication, the means being selectively formed on a single chip on an electronic board.

10. A sensor as claimed in claim 9 including a microprocessor, memory and computational means in the electronic system within the sensor.

11. A method of sensing a condition in an engine comprising, mounting an analog sensor in relation to the engine for sensing a condition of the engine;
obtaining with the sensor an analog measurement of the condition ;
translating, in the sensor, the analog measurement into an electronic digital signal; and
transmitting the digital signal to an output.

12. A method as claimed in claim 11 including operating the sensor with other sensors in a network, and wherein the output from the sensors are connected for communication to a data bus and wherein the output is such that the communication can be connected in a peer to peer mode with the other sensors or in a master-slave mode with a central processor unit associated with the sensor network.

13. A method as claimed in claim 11 including processing the digital signal prior to transmitting the signal to a remote electronic system.

14. A method as claimed in claim 11 using a system including multiple sensors wherein each sensor senses a particular predetermined environmental condition, and interconnecting the sensors whereby the sensors operate in a peer to peer relationship.

15. A method as claimed in claim 11 using a system including multiple sensors wherein each sensor senses a particular predetermined environmental condition, and interconnecting the sensors whereby the sensors operate in a master-slave relationship.

16. A method as claimed in claim 11 including effecting signal conversion from analog to digital, signal conditioning, signal calibration, signal compensation, signal communication in the sensor.
